(19) Europäisches Patentamt
European Patent Office
Office européen des brevets

(11) Veröffentlichungsnummer : **0 134 442 B1**

(12)
# EUROPÄISCHE PATENTSCHRIFT

(45) Veröffentlichungstag der Patentschrift : **30.12.86**

(51) Int. Cl.⁴ : **C 08 L 83/04**

(21) Anmeldenummer : **84107265.5**

(22) Anmeldetag : **25.06.84**

(54) **Bei Raumtemperatur vernetzende Siliconpasten.**

(30) Priorität : **02.07.83 DE 3323912**

(43) Veröffentlichungstag der Anmeldung : **20.03.85 Patentblatt 85/12**

(45) Bekanntmachung des Hinweises auf die Patenterteilung : **30.12.86 Patentblatt 86/52**

(84) Benannte Vertragsstaaten : **AT BE CH DE FR GB IT LI NL SE**

(56) Entgegenhaltungen :
**EP-A- 0 022 976**
**DE-B- 1 258 087**
**FR-A- 2 521 574**
**GB-A- 1 089 227**
**GB-A- 1 098 899**
**GB-A- 2 094 818**

(73) Patentinhaber : **BAYER AG**
**Konzernverwaltung RP Patentabteilung**
**D-5090 Leverkusen 1 Bayerwerk (DE)**

(72) Erfinder : **Würminghausen, Thomas, Dr.**
**Christian-Hess-Strasse 65**
**D-5090 Leverkusen 1 (DE)**
Erfinder : **Saykowski, Franz, Dr.**
**Andreas-Gryphius-Strasse 11**
**D-5000 Köln 80 (DE)**
Erfinder : **Sattlegger, Hans, Dr.**
**Auf dem Heidchen 9**
**D-5068 Odenthal (DE)**
Erfinder : **Achtenberg, Theo**
**Im Bergischen Heim 6**
**D-5090 Leverkusen 3 (DE)**

**EP 0 134 442 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft bei Raumtemperatur unter dem Einfluß von Wasser bzw. des Wasserdampfes der Luft vulkanisierende, ein- oder zweikomponentige Siliconpasten, im folgenden kurz als RTV — Siliconpasten bezeichnet.

RTV-Pasten sind bereits seit Jahren bekannt (vgl. z. B. W. Noll, Chemie und Technologie der Silicone, Verlag Chemie GmbH., 1986, S. 391) ; es hat sich aber gezeigt, daß die Verwendungsmöglichkeiten derartiger Pasten so vielgestaltig sind, daß man mit nur einer Pastenformulierung und entsprechend nur einer Sorte von zur Herstellung derartiger Pasten notwendigen Rohstoffen nicht jedem Marktbedarf gerecht werden kann. So ist z. B. streng zu unterscheiden, ob der nach der Vulkanisationsreaktion aus der Siliconpaste entstandene Silicongummi die Substrate entgegen einer Kraftwirkung miteinander verkleben soll oder ob der Silicongummi eine abdichtende Funktion zwischen zwei Substraten erfüllen soll, die z. B. witterungsbedingt gegeneinander bewegt sind. Im ersten Fall ist ein hartes Vulkanisat mit hohem Modul, im zweiten Fall ein Vulkanisat mit niedrigem Modul und hoher Bruchdehnung für den Einsatz vorzuziehen, da nur bei weichem Vulkanisat die Kraftwirkung auf die Kontaktfläche zwischen Silicongummi und Substrat gering ist — bei entsprechend geringer Gefahr eines kohäsiven Abreißens — und nur so eine dauerhaft wirksame Abdichtung erreicht werden wird. Es sind verschiedene Maßnahmen beschrieben worden, wie derartige Vulkanisate mit niedrigem Modul hergestellt werden können, z. B. in DE-B-1 258 087.

Die zugrundeliegenden RTV-Siliconpasten sind — was für den Anwender besonders wünschenswert ist — geruchsneutral und chemisch neutral, sie haben jedoch den Nachteil, daß sie unter Beibehaltung der geforderten Weichheit nur mit relativ geringen Mengen Füllstoffen formuliert werden können.

Es war daher die Aufgabe der vorliegenden Erfindung, ein geruchsarmes System mit niedrigem Modul, guter Bruchdehnung und einem relativ hohen Anteil an Füllstoffen herzustellen, ohne dazu aufwendige Ausgangsprodukte einsetzen zu müssen.

Bei den bekannten RTV-Siliconpasten, die zu Produkten mit niedrigem Modul vulkanisieren, beobachtet man häufig deutliche Nachteile.

Diese Pasten werden alle unter Verwendung von mindestens zwei verschiedenen hydrolysierbaren Siliziumverbindungsklassen hergestellt : Die beiden Siliziumverbindungen unterschieden sich

a) in der Anzahl der hydrolysierbaren Gruppen und in der Regel

b) in der Art der Abgangsgruppen und

c) den über Kohlenstoff an Silizium gebundenen organischen Substituenten, so daß die zugrundeliegenden Silane/Siloxane häufig nicht marktüblich oder nur schwierig herstellbar sind.

Außerdem zeigen die in der Patentliteratur beschriebenen Systeme mit niedrigem Modul noch andere Nachteile in Bezug auf Haftung auf verschiedenen Substraten, Klebrigkeit der Oberfläche, geringer Zugfestigkeit und mangelnder Lagerstabilität der fertigen Pasten.

Beispiele sind in der DE-B-1 264 058 beschrieben. Diese Pasten enthalten zwei Siliciumverbindungen, die zwei bzw. drei Hydroxylaminabgangsgruppen beinhalten aber nicht lagerstabil sind. In der DE-A-2 308 806 wird im wesentlichen die Verwendung von Methylvinyldi-N-methylacetamidosilan und Siliciumverbindungen mit 3 bis 10 hydrolytisch abspaltbaren Hydroxylamingruppen beschrieben, die DE-A-2 319 817 beschreibt die Verwendung des gleichen difunktionellen Silans wie in DE-A-2 308 806, jedoch unter Verwendung einer weiteren Siliciumverbindung, die drei Aminabgangsgruppen enthalten ; auch diese Paste ist damit aber nicht geruchsneutral.

In US-A-3 962 160 werden Systeme beschrieben, die organofunktionelle Silane mit zwei hydrolytisch labilen Gruppen als « Kettenverlängerer » enthalten, die sogar erst über platinkatalysierte Olefin-Si-H-Additionsreaktionen synthetisiert werden müssen. In EP-A-36262 werden wiederum Systeme mit di- und mindestens trifunktionellen Silanen beansprucht, wobei im wesentlichen Methylvinyldiaminoxysilan als Kettenverlängerer und Oxim-, Amin-, Alkoxy- sowie Amidosilane als Vernetzer beansprucht werden. Hier müssen also wiederum zwei Silane aus verschiedenen Stoffklassen synthetisiert werden, wobei das Methylvinylsilan erst in aufwendiger Reaktion hergestellt werden muß. Das gleiche gilt auch für den Gegenstand der Patentanmeldungen DE-A-2 319 818 und DE-A-3 207 336.

Die vorliegende Erfindung betrifft neue bei Umgebungstemperatur unter Einfluß von Wasser bzw. Feuchtigkeit zu Elastomeren härtbare Polydiorganosiloxanmassen, erhältlich durch Vermischen von Polydiorganosiloxanen mit reaktiven Endgruppen, Dialkylsilanen mit hydrolysierbaren Si-N-Gruppen der allgemeinen Formel

$$RCH_3Si(NRR')_2$$

wobei

R jeweils unabhängig für einen Alkyl- oder Cycloalkylrest mit bis zu 8 C-Atomen,

R' für Wasserstoff,

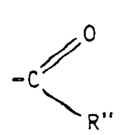

oder R,

R″ für einen Alkyl-, Cycloalkyl-, Aryl- oder Aralkylrest mit bis zu 8 C-Atomen steht und wobei R und R′ gemeinsam Hexan-1-on-1,6-diyl sein können,

Alkylsilanen der allgemeinen Formel

$$CH_3Si(NXY)_p(OZ)_q$$

wobei

X und Z für Methyl oder Ethyl und

Y für

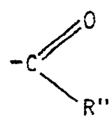

stehen und

$p + q = 3$ und $p = 0$, 1 oder 2 bedeutet,

thixotropierend wirkenden Füllstoffen, Kondensationskatalysatoren und gegebenenfalls weiteren an sich bekannten Hilfsstoffen.

In der vorliegenden Erfindung ist es insbesondere gegenüber DE-C-1 258 087 gelungen, ein System mit niedrigem Modul und guter Bruchdehnung zu entwickeln, bei dem die Füllstoffmenge deutlich erhöht ist und die zugrundeligenden Silane einfach Alkylsilane sind.

Die Erfindung betrifft Pasten, die durch Vermischen von 100 Gew.-Teilen α,ω-Dihydroxypolydiorganosiloxan der Viskosität 100 bis 500 000 mPa·s bei 25 °C, 0 bis 100 Gewichtsteilen α,ω-Bis(trialkylsiloxy)-polydiorganosiloxan der Viskosität 10 mPa·s bis 10 000 mPa·s bei 25 °C, 3,0 bis 30,0 Gewichtsteilen Dialkylsilan mit 2 hydrolysierbaren Si-N-Gruppen, 6 bis 30 Gewichtsteilen Methylamidoalkoxysilan oder Alkoxysilan, bis zu 400 Gewichtsteilen thixotropierend wirkender Füllstoffe und eines Kondensationskatalysators erhalten werden.

Als α,ω-Dihydroxypolydiorganosiloxane werden der leichten Zugänglichkeit wegen bevorzugt Polydimethylsiloxane verwendet. Statt der methylgruppenhaltigen Polymeren können auch solche verwendet werden, bei denen zumindest ein Teil der Methylgruppen durch Vinyl-, Phenyl-, längerkettige Alkyl- oder Haloalkylgruppen ersetzt ist. Diese Polymere sollen im wesentlichen linear sein, geringe Anteile an verzweigend wirkenden Organosiloxyeinheiten können jedoch anwesend sein.

Die Hydroxylgruppen der Polymere können durch hydrolytisch abspaltbare Endgruppen ersetzt worden sein, wie z. B. durch Amidogruppen.

Die Viskosität der Polymere liegt bevorzugt zwischen 5 000 mPa·s um eine befriedigende Dehnbarkeit zu erreichen und 100 000 mPa·s um eine gute Handhabung des sonst zu zähflüssigen Materials zu gewährleisten. Der zweite aufgeführte Bestandteil der erfindungsgemäßen Pasten ist ein durch Trimethylsiloxygruppen endgestopptes Polydiorganosiloxan, dessen Organogruppen normalerweise Methylgruppen aber auch zumindest zum Teil Vinyl- oder Phenylgruppen sein können. Auch in diesem Polymer dürfen statt der Diorganosiloxybaugruppen Anteile an verzweigend wirkenden Gruppen vorhanden sein.

Als difunktionelles, hydrolytisch labiles Silan wird bevorzugt Dimethyldi-N-methylbenzamidosilan verwendet, weil die Tendenz zum Ausblühen von Kristallen auf der Oberfläche eines Vulkanisates bei Verwendung dieses Amides besonders gering ist, jedoch ist die Verwendung eines anderen Amides im difunktionellen und trifunktionellen Silan sonst nicht ausgeschlossen. Insbesondere kommen dafür Ethylacetamid, N-Methylpropionamid und Caprolactam infrage. Die Menge des difunktionellen Silans, die der Pastenformulierung zugesetzt wird, bestimmt — gemeinsam mit der Herstellungsweise der Paste — die mechanischen Daten des Vulkanisates. Der Einfluß wird in den Beispielen verdeutlicht.

Anstelle dieser Siliciumverbindungen ist die Verwendung von Dimethyldiaminosilanen, insbesondere von Dimethyldibutylaminosilan und Dimethyldicyclohexylaminosilan, bzw. Dimethylaminoamidosilanen möglich. Darüber hinaus erscheinen besonders geeignet auch Methylethyl- bzw. Methylpropyl-di-N-methylbenzamidosilan bzw. dicyclohexylaminosilan. Anstatt der Methylgruppen können als Si—C gebundene Gruppen auch $C_nH_{2n+m}$-Gruppen ($n = 2$ bis 8, $m = \pm 1$), die gegebenenfalls durch Amino-, Amido-, Thio- oder Oxo-Gruppen substituiert sein können, wie z. B. N-β-Aminoethyl-N-γ-aminopropyl-methyl-di-N-methyl-benzamido-silan oder $NH_2CH_2CH_2NH(CH_2)_3(CH_3)Si(NHC_6H_{11})_2$ eingesetzt werden.

Vernetzend in den erfindungsgemäßen Pasten wirkt ein Methyl-di-N-alkylamido-ethoxysilan und/oder Methyl-N-alkylamido-diethoxysilan, besonders bevorzugt mit N-Methylbenzamid als Alkylamidogruppe oder ein Alkoxysilan wie z. B. Methyltriethoxysilan oder Methyltrimethoxysilan.

Die Menge an vernetzend wirkendem Silan muß groß genug sein, um eine lange Lagerstabilität zu gewährleisten, während die relative Menge in bezug auf das difunktionelle Silan die Mechanik der

ausgehärteten Pasten beeinflußt. Durch die Variation der jeweiligen Mengen erhält man mechanische Eigenschaften der Vulkanisate — wie in den Beispielen angegeben — die dem jeweiligen Verwendungszweck angepaßt werden können. Entsprechend der Wasserempfindlichkeit dieser Silane beinhaltet der erfindungsgemäße Gedanke auch die Verwendung der partiellen Hydrolyseprodukte dieser di- bzw. trifunktionellen Siliziumverbindungen.

Wesentlich ist weiterhin die Verwendung mindestens eines Füllstoffes, der wie normalerweise gewünscht, eine standfeste Paste beim Einmischen ergibt. Diese Standfestigkeit ist beim Verwenden der Paste als Fugendichtungsmaterial in senkrechten oder waagerechten, nach unten offenen Fugen unabdingbar, um ein Herausfließen der Paste vor der Vulkanisation zu verhindern. Im Rahmen der erfindungsgemäßen Pasten werden dazu im wesentlichen fein gemahlener Dolomit mit einer durchschnittlichen Korngröße ≤ 2 µm oder handelsübliche (oberflächenbehandelte) Kreide (z. B. mit Stearinsäure behandelt) mit einer durchschnittlichen Korngröße von weniger als 1 µm eingesetzt. Die Verwendung anderer Füllstoffe ist dadurch nicht ausgeschlossen.

Des weiteren ist es in den erfindungsgemäßen Pasten möglich Kondensationskatalysatoren zu verwenden, wie sie üblicherweise für RTV-Siliconpasten beschrieben sind, wie Metallsalze organischer Säuren, wie z. B. Dibutylzinndiacetat oder Titanchelate. Diese Zusatzstoffe werden in Mengen von 0,01 bis 6 Gew.-% in die Paste eingearbeitet. Weiterhin können auch übliche Silane, wie z. B. Tetraethoxysilan, oder deren Hydrolyseprodukte zugesetzt werden.

Darüber hinaus können auch weitere Zusatzstoffe in den erfindungsgemäßen Pasten mitverwendet werden. Dazu gehören z. B. Alkane, organische Lösungsmittel, Polymere z. B. auf der Basis üblicher Olefine oder Alkine sowie Polyester, Polyether, Polyacrylnitril.

In den folgenden Beispielen beziehen sich die Viskositätsangaben auf 25 °C, die verwendeten Mengen kennzeichnen Gewichtsteile bzw. Gewichtsprozente, die Shore A Werte werden nach DIN 53 505, E-Modul, Zugfestigkeit und Bruchdehnung nach DIN 53 504 bestimmt. Die Herstellung der Pasten erfolgt unter im wesentlichen wasserfreien Bedingungen in Vakuum-Planetenmischern, kann jedoch in anderen üblicherweise verwendeten Maschinen vorgenommen werden.

Beispiel 1

90 Teile α,ω-Dihydroxypolydimethylsiloxans der Viskosität 50 000 mPa·s und 60 Teile α,ω-Bis-(trimethyl)-siloxy)-dimethylsiloxan der Viskosität 1 000 mPa·s werden mit 7,5 Teilen Dimethyldi-N-methylbenzamidosilan, 135 Teilen gefällter und mit Stearinsäure behandelter Kreide (mittlere Teilchengröße unter 1 µm) sowie 0,03 Teilen Dibutylzinndilaurat innig vermischt bis nach ca. 45 Minuten eine homogene Paste entstanden ist. Daraufhin werden 13,5 Teile Methyldi-N-methylbenzamidoethoxysilan eingemischt. Die standfeste Paste vulkanisiert an der Luft zu einem Material, das nach 7 Tagen folgende Eigenschaften aufweist :

| | |
|---|---|
| Shore A | 12 |
| E-Modul 100 % | 0,19 [MPa] |
| Zugfestigkeit | 1,31 [MPa] |
| Bruchdehnung | 1 033 % |

Beispiel 2

90 Teile α,ω-Dihydroxypolydimethylsiloxan der Viskosität 50 000 mPa·s werden mit 55,5 Teilen α,ω-Bis-(trimethylsiloxy)-polydimethylsiloxan der Viskosität 1 000 mPa·s, 135 Teilen Calciumcarbonat (wie in Beispiel 1), 15 Teilen Methyldi-N-methylbenzamidoethoxysilan, 6 Teilen Dimethyldi-N-methylbenzamidosilan und 1,5 Teilen Dibutylzinndiacetat intensiv gemischt bis eine homogene, glatte Paste entsteht. Die Paste härtet unter dem Einfluß der Luftfeuchtigkeit zu einem Vulkanisat mit den mechanischen Daten :

| | |
|---|---|
| Shore A | 22 |
| E-Modul 100 % | 0,46 [MPa] |
| Zugfestigkeit | 1,64 [MPa] |
| Bruchdehnung | 713 % |

Beispiel 3 (Vergleich)

105,6 Teile α,ω-Dihydroxypolydimethylsiloxan der Viskosität 50 000 mPa·s, 30 Teile α,ω-Bis-(trimethylsiloxy)-polydimethylsiloxan der Viskosität 1 000 mPa·s und 13,5 Teile Dibutoxy-titan-bis-(ethylacetoacetat) werden mit 13,5 Teilen pyrogener Kieselsäure (BET Oberfläche : 130 $m^2/g$), 120,0 Teilen natürlicher, mit Stearinsäure gecoateter Kreide, 3,0 Teilen Titandioxid, 2,1 Teilen Dibutylzinndilaurat und 12 Teilen Methyldi-N-methylbenzamidoetoxysilan vermischt. Nach 7 Tagen hat das Vulkanisat die mechanischen Eigenschaften :

| | |
|---|---|
| Shore A | 35 |

| | |
|---|---|
| E-Modul 100 % | 0,5 [MPa] |
| Zugfestigkeit | 0,8 [MPa] |
| Bruchdehnung | 520 % |

## Beispiel 4

90 Teile α,ω-Dihydroxypolydimethylsiloxan der Viskosität 50 000 mPa·s werden mit 60 Teilen α,ω-Bis-(trimethylsiloxy)-polydimethylsiloxan der Viskosität 1 000 mPa·s, 10,5 Teilen Dimethyldi-N-methylbenzamidosilan und 0,15 Teilen Dibutylzinndiacetat 15 Minuten gemischt. Anschließend werden 135 Teile Kreide mit einer durchschnittlichen Korngröße von weniger als 1 μm 30 Minuten eingerührt und zuletzt 13,5 Teile Methyldi-N-methylbenzamidoethoxysilan schnell eingearbeitet. Eine Probe vulkanisierte an der Luft und ergab nach 7 Tagen die mechanischen Werte :

| | |
|---|---|
| Shore A | 12 |
| E-Modul 100 % | 0,15 [MPa] |
| Zugfestigkeit | 0,67 [MPa] |
| Bruchdehnung | 766 % |

## Beispiel 5

30 Gew.-Tle. α,ω-Dihydroxypolydimethylsiloxan der Viskosität 50 000 mPa·s, 20 Gew.-Tle. α,ω-Bis-(trimethylsiloxy)-polydimethylsiloxan der Viskosität 1 000 mPa·s werden mit 2 Gew.-Tle. Dimethyldicyclohexylaminosilan gemischt. Nun werden 45 Gew.-Tle. einer Kreide (Teilchengröße 1 μm) zugegeben und ca. 30 Minuten gut vermischt. Dann werden 4,5 Gew.-Tle. Methyl-di-N-methylbenzamidoethoxysilan und am Schluß noch 0,05 Gew.-Tle. Dibutylzinndiacetat eingearbeitet. Die standfeste Paste vulkanisiert an der Luft zu einem Material, welches nach 7 Tagen folgende mechanischen Werte ergibt :

| | |
|---|---|
| Shore A-Härte | 12 |
| E-Modul 100 % | 0,2 [MPa] |
| Zugfestigkeit | 1,2 [MPa] |
| Reißdehnung | 1 000 % |

## Beispiel 6

30 Gew.-Tle. α,ω-Dihydroxypolydimethylsiloxan der Viskosität 50 000 mPa·s, 20 Gew.-Tle. α,ω-Bis-(trimethylsiloxy)polydimethylsiloxan der Viskosität 1 000 mPa·s werden mit 2 Gew.-Tle. Dimethyldi-N-methylbenzamidosilan gemischt. Nun werden 45 Gew.-Tle einer Kreide (entsprechend Beispiel 1) sowie 0,1 Gew.-Tle. Dibutylzinndilaurat zugegeben und ca. 30 Minuten gut vermischt. Dann werden 4,5 Gew.-Tle. Methyldi-N-methylbenzamidoethoxysilan eingemischt.

Die standfeste Paste vulkanisiert an der Luft zu einem Material, welches nach 7 Tagen folgende mechanischen Werte ergibt :

| | |
|---|---|
| Shore A-Härte | 17 |
| E-Modul 100 % | 0,3 [MPa] |
| Zugfestigkeit | 1,7 [MPa] |
| Reißdehnung | 1 040 % |

## Beispiel 7

30 Gew.-Tle. α,ω-Dihydroxypolydimethylsiloxan der Viskosität 50 000 mPa·s und 20 Gew.-Tle. α,ω-Bis-(trimethylsiloxy)-polydimethylsiloxan der Viskosität 1 000 mPa·s werden mit 2,5 Gew.-Tle. Dimethyldi-N-methylbenzamidosilan gemischt. Nun werden 45 Gew.-Tle. einer Kreide (Teilchengröße < 1 μm) sowie 0,03 Gew.-Tle. Dibutylzinndilaurat zugegeben und ca. 30 Minuten gut eingearbeitet. Dann werden 4,5 Gew.-Tle. Methyldi-N-methylbenzamidoethoxysilan eingemischt.

Die standfeste Paste vulkanisiert an der Luft zu einem Material, welches nach 7 Tagen folgende mechanischen Werte ergibt :

| | |
|---|---|
| Shore A-Härte | 13 |
| E-Modul 100 % | 0,2 [MPa] |
| Zugfestigkeit | 1,0 [MPa] |
| Reißdehnung | 1 000 % |

## Beispiel 8

27,8 Gew.-Tle. α,ω-Dihydroxypolydimethylsiloxan der Viskosität 50 000 mPa·s und 18,5 Gew.-Tle. α,ω-Bis-(trimethylsiloxy)-polydimethylsiloxan der Viskosität 1 000 mPa·s werden vorgelegt. Nun werden 47,2 Gew.-Tle. eines gemahlenen Dolomits (mittlerer Korndurchmesser 2,0 μm) eingearbeitet. Danach werden 2,3 Gew.-Tle. Dimethyldi-N-methylbenzamidosilan und 0,1 Gew.-Tle. Dibutylzinndiacetat zugegeben und unter Vakuum ca. 15 Minuten gut vermischt. Dann werden 4,2 Gew.-Tle. Methyl-di-N-methylbenzamidoethoxysilan zugesetzt und ca. 10 Minuten unter Vakuum gerührt. Die Paste vulkanisiert an der Luft zu einem Gummi, welcher nach 7 Tagen folgende Eigenschaften aufweist :

| | |
|---|---|
| Shore A-Härte | 8 |
| E-Modul 100 % | 0,14 [MPa] |
| Zugfestigkeit | 1,30 [MPa] |
| Reißdehnung | 750 % |

Beispiel 9

27,8 Gew.-Tle. α,ω-Dihydroxypolydimethylsiloxan der Viskosität 50 000 mPa·s und 19,5 Gew.-Tle. α,ω-Bis-(trimethylsiloxy)-polydimethylsiloxan der Viskosität 1 000 mPa·s werden vorgelegt. Nun werden 47,2 Gew.-Tle. eines gemahlenen Dolomits (mittlerer Korndurchmesser 1,8 μm) eingearbeitet. Danach werden 2,3 Gew.-Tle. Dimethyldi-N-methylbenzamidosilan und 0,1 Gew.-Tle. Dibutylzinndiacetat zugegen und unter Vakuum ca. 15 Minuten gut vermischt. Dann werden 4,2 Gew.-Tle. Methyl-di-N-methylbenzamidoethoxysilan zugesetzt und ca. 10 Minuten unter Vakuum gerührt. Die Paste vulkanisiert an der Luft zu einem Gummi, welcher nach 7 Tagen folgende Eigenschaften aufweist :

| | |
|---|---|
| Shore A-Härte | 7 |
| E-Modul 100 % | 0,14 [MPa] |
| Zugfestigkeit | 0,42 [MPa] |
| Reißdehnung | 790 % |

Beispiel 10

19,2 Gew.-Tle. α,ω-Dihydroxypolydimethylsiloxan der Viskosität 50 000 mPa·s und 12,8 Gew.-Tle. α,ω-Bis-(trimethylsiloxy)-polydimethylsiloxan der Viskosität 1 000 mPa·s werden vorgelegt. Nun werden 63,5 Gew.-Tle. eines gemahlenen Dolomits (mittlerer Korndurchmesser 2,0 μm) eingearbeitet. Danach werden 1,3 Gew.-Tle. Dimethyldiisobutylaminosilan zugegeben und unter Vakuum ca. 15 Minuten gut vermischt. Dann werden 2,9 Gew.-Tle. Methyl-di-N-methylbenzamidoethoxysilan sowie 0,06 Gew.-Tle. Dibutylzinndiacetat zugesetzt und ca. 10 Minuten unter Vakuum gerührt. Die Paste vulkanisiert an der Luft zu einem Gummi, welcher nach 7 Tagen folgende Eigenschaften aufweist :

| | |
|---|---|
| Shore A-Härte | 24 |
| E-Modul 100 % | 0,36 [MPa] |
| Zugfestigkeit | 0,69 [MPa] |
| Reißdehnung | 600 % |

Beispiel 11

19,2 Gew.-Tle. α,ω-Dihydroxypolydimethylsiloxan der Viskosität 50 000 mPa·s und 12,8 Gew.-Tle. α,ω-Bis-(trimethylsiloxy)-polydimethylsiloxan der Viskosität 1 000 mPa·s werden vorgelegt. Nun werden 63,5 Gew.-Tle. eines gemahlenen Dolomits (mittlere Korndurchmesser 1,8 μm) eingearbeitet. Danach werden 1,3 Gew.-Tle. Dimethyldicyclohexylaminosilan zugegeben und unter Vakuum ca. 15 Minuten gut vermischt. Dann werden 2,9 Gew.-Tle. Methyl-di-N-methylbenzamidoethoxysilan sowie 0,06 Gew.-Tle. Dibutylzinndiacetat zugesetzt und ca. 10 Minuten unter Vakuum gerührt. Die Paste vulkanisiert an der Luft zu einem Gummi, welcher nach 7 Tagen folgende Eigenschaften aufweist :

| | |
|---|---|
| Shore A-Härte | 23 |
| E-Modul 100 % | 0,38 [MPa] |
| Zugfestigkeit | 0,66 [MPa] |
| Reißdehnung | 550 % |

Beispiel 12

90 g α,ω-Dihydroxypolydimethylsiloxan der Viskosität 50 000 mPa·s, 60 g α,ω-Bis-(trimethylsiloxy)-polydimethylsiloxan der Viskosität 100 mPa·s, 9 g Dimethyldi-N-methylbenzamidosilan, 135 g einer Kreide wie im Beispiel 1 und 0,15 g Dibutylzinndilaurat werden vermischt. In diese Paste werden 7,5 g Di-i-butoxytitan-bis-(ethylacetoacetat) und 12,0 g Methyltriethoxysilan eingemischt. Die Masse vulkanisiert zu einem Silicongummi, dessen mechanische Eigenschaften nach sechs Tagen gemessen werden :

| | |
|---|---|
| Shore A-Härte | 24 |
| E-Modul 100 % | 0,41 [MPa] |
| Zugfestigkeit | 0,75 [MPa] |
| Bruchdehnung | 362 % |

Beispiel 13

90 g α,ω-Dihydroxypolydimethylsiloxan der Viskosität 50 000 mPa·s, 36 g α,ω-Bis-(trimethylsiloxy)-polydimethylsiloxan der Viskosität 100 mPa·s, 9 g Dimethyldi-N-methylbenzamidosilan, 135 g Kreide wie in Beispiel 1 und 0,3 g Dibutylzinndilaurat werden vermischt (Komponente 1).

Die Komponente 2 wird durch Vermischen von 24 g α,ω-Bis-(trimethylsiloxy)-polydimethylsiloxan der Viskosität 100 mPa·s, 3 g Methyltriethoxysilan und als weiterem an sich bekannten Hilfsstoff 0,9 g eines Ethylpolysilikats (Feststoffgehalt ~ 40 % $SiO_2$) erhalten. Die aus beiden Komponente hergestellt Paste vulkanisiert innerhalb von 12 Stunden auch in dicken Schichten zu einem Gummi, dessen Prüfung nach 7 Tagen durchgeführt wird.

| | |
|---|---|
| Shore A-Härte | 16 |
| E-Modul 100 % | 0,23 [MPa] |
| Zugfestigkeit | 2,13 [MPa] |
| Bruchdehnung | 1 420 % |

Beispiel 14

90 g α,ω-Dihydroxypolydimethylsiloxan der Viskosität 50 000 mPa·s, 60 g α,ω-Bis-(trimethylsiloxy)-polydimethylsiloxan der Viskosität 100 mPa·s, 9 g Dimethyldi-N-methylbenzamidosilan, 135 g einer Kreide aus Beispiel 1 und 0,15 g Dibutylzinndilaurat werden vermischt. In diese Paste werden 7,5 g Di-i-butoxytitan-bis-(ethylacetoacetat) und 12 g Methyldiethoxy-N-methylbenzamidosilan eingemischt. Die Masse vulkanisiert zu einem Silicongummi mit folgenden Eigenschaften nach vier Tagen :

| | |
|---|---|
| Shore A-Härte | 24 |
| E-Modul 100 % | 0,43 [MPa] |
| Zugfestigkeit | 0,79 [MPa] |
| Bruchdehnung | 400 % |

**Patentansprüche**

1. Bei Umgebungstemperatur unter Einfluß von Wasser bzw. Feuchtigkeit zu Elastomeren härtbare Polydiorganosiloxanmassen, erhältlich durch Vermischen von Polydiorganosiloxanen mit reaktiven Endgruppen, Dialkylsilanen mit hydrolysierbaren Si—N-Gruppen der allgemeinen Formel

$$RCH_3Si(NRR')_2$$

wobei

R jeweils unabhängig für einen Alkyl- oder Cycloalkylrest mit bis zu 8 C-Atomen

R′ für Wasserstoff,

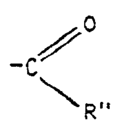

oder R,

R″ für einen Alkyl-, Cycloalkyl-, Aryl- oder Aralkylrest mit bis zu 8 C-Atomen steht und wobei R und R′ gemeinsam Hexan-1-on-1,6-diyl sein können,

Methylsilanen der allgemeinen Formel

$$CH_3Si(NXY)_p(OZ)_q$$

wobei

X und Z für Methyl oder Ethyl und

Y für

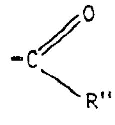

stehen und

$p + q = 3$ und $p = 0$, 1 oder 2 bedeutet,

thixotropierend wirkenden Füllstoffen, Kondensationskatalysatoren und gegebenenfalls weiteren an sich bekannten Hilfsstoffen.

2. Polydiorganosiloxanmassen nach Anspruch 1, dadurch gekennzeichnet, daß 100 Gew.-Tle. α,ω-Dihydroxypolydimethylsiloxan, 3-30 Gew.-Tle. Methylalkyldiamidosilan oder -diaminosilan, 6-30 Gew.-Tle. Methylsilan der allgemeinen Formel $CH_3Si(NXY)_p(OZ)_q$, bis zu 400 Gew.-Tle. Füllstoff und 0,01 bis 6,0 Gew.-Tle. eines Kondensationskatalysators sowie gegebenenfalls bis zu 100 Gew.-Tle. α,ω-Bis-(trimethylsiloxy)-polydimethylsiloxan vermischt werden.

3. Polydiorganosiloxanmassen nach einem der Ansprüche 1 oder 2, dadurch gekennzeichnet, daß als difunktionelles Silan Dimethyldi-N-methylbenzamidosilan verwendet wird.

4. Polydiorganosiloxanmassen nach Anspruch 1 oder 2, dadurch gekennzeichnet, daß als difunktionelles Silan Dimethyldibutylaminosilan oder Dimethyldicyclohexylaminosilan verwendet wird.

5. Polydiorganosiloxanmasse nach einem der Ansprüche 1 oder 2, dadurch gekennzeichnet, daß als Methylsilan $CH_3Si(OR_3)$ verwendet wird.

6. Polydiorganosiloxanmasse nach einem der Ansprüche 1 oder 2, dadurch gekennzeichnet, daß als Methylsilan $CH_3Si(OCH_3)_3$ verwendet wird.

7. Polydiorganosiloxanmasse nach einem der Ansprüche 1 oder 2, dadurch gekennzeichnet, daß als Methylsilan Methyldialkoxy-N-methylbenzamidosilan und/oder Methyldi-N-methylbenzamidoalkoxysilan verwendet wird.

8. Polydiorganosiloxanmasse nach einem der Ansprüche 1 oder 2, dadurch gekennzeichnet, daß als Methylsilan Methyldiethoxy-N-methyl-benzamidosilan und/oder Methyldi-N-methyl-benzamidoethoxysilan verwendet wird.

9. Polydiorganosiloxanmasse nach einem der Ansprüche 1-8, dadurch gekennzeichnet, daß 0-10 Gew.-Tle eines Titanesters mitverwendet werden.

10. Polydiorganosiloxanmasse nach Anspruch 9, dadurch gekennzeichnet, daß als Titanester Di-i-butoxytitan-bis-(ethylacetoacetat) verwendet wird.

**Claims**

1. Polydiorganosiloxane compositions which can be hardened to form elastomers at ambient temperature under the influence of water or moisture, obtainable by mixing polydiorganosiloxanes with reactive end groups, dialkylsilanes with hydrolysable Si—N groups of the general formula

$$RCH_3Si(NRR')_2$$

wherein

the R's each independently represent an alkyl or cycloalkyl radical with up to 8 C atoms,

R' represents hydrogen,

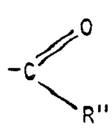

or R,

R'' represents an alkyl, cycloalkyl, aryl or aralkyl radical with up to 8 C atoms and wherein R and R' can together be hexan-1-one-1,6-diyl,

methylsilanes of the general formula

$$CH_3Si(NXY)_p(OZ)_q$$

wherein

X and Z represent methyl or ethyl and

Y represents

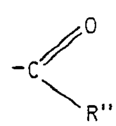

and

p + q denote 3 and p denotes 0, 1 or 2,

thixotropic fillers, condensation catalysts and optionally other auxiliaries known *per se*.

2. Polydiorganosiloxane compositions according to Claim 1, characterised in that 100 parts by weight of α,ω-dihydroxypolydimethylsiloxane, 3-30 parts by weight of methylalkyldiamidosilane or -diaminosilane, 6-30 parts by weight of a methylsilane of the general formula $CH_3Si(NXY)_p(OZ)_q$, up to 400 parts by weight of a filler and 0.01 to 6.0 parts by weight of a condensation catalyst and optionally up to 100 parts by weight of α,ω-bis-(trimethylsiloxy)-polydimethylsiloxane are mixed.

3. Polydiorganosiloxane compositions according to one of Claims 1 or 2, characterised in that dimethyl-di-N-methyl-benzamidosilane is used as the difunctional silane.

4. Polydiorganosiloxane compositions according to Claim 1 or 2, characterised in that dimethyldibutylaminosilane or dimethyldicyclohexylaminosilane is used as the difunctional silane.

5. Polydiorganosiloxane composition according to one of Claims 1 or 2, characterised in that $CH_3Si(OR)_3$ is used as the methylsilane.

6. Polydiorganosiloxane composition according to one of Claims 1 or 2, characterised in that $CH_3Si(OCH_3)_3$ is used as the methylsilane.

7. Polydiorganosiloxane composition according to one of Claims 1 or 2, characterised in that methyldialkoxy-N-methylbenzamidosilane and/or methyl-di-N-methylbenzamidoalkoxysilane is used as the methylsilane.

8. Polydiorganosiloxane composition according to one of Claims 1 or 2, characterised in that methyldiethoxy-N-methyl-benzamidosilane and/or methyl-di-N-methyl-benzamidoethoxysilane is used as the methylsilane.

9. Polydiorganosiloxane composition according to one of Claims 1-8, characterised in that 0-10 parts by weight of a titanium ester are also used.

10. Polydiorganosiloxane composition according to Claim 9, characterised in that di-i-butoxytitanium-bis-(ethylacetoacetate) is used as the titanium ester.

**Revendications**

1. Masses de polydiorganosiloxannes durcissables à température ambiante sous l'influence de l'eau ou de l'humidité, qu'on obtient en mélangeant des polydiorganosiloxannes à groupes terminaux réactifs, des dialkylsilanes à groupes Si—N hydrolysables, de formule générale

$$RCH_3Si(NRR')_2$$

dans laquelle

chacun des symboles R représente, indépendamment, un groupe alkyle ou cycloalkyle contenant jusqu'à 8 atomes de carbone,

R′ représente l'hydrogène,

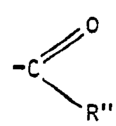

ou R,

R″ représente un groupe alkyle, cycloalkyle, aryle ou aralkyle contenant jusqu'à 8 atomes de carbone, R et R′ pouvant également former ensemble un groupe hexane-1-one-1,6-diyle,

des méthylsilanes de formule générale

$$CH_3Si(NXY)_p(OZ)_q$$

dans laquelle

X et Z représentent des groupes méthyle ou éthyle et

Y représente

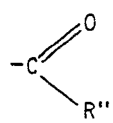

et

p + q = 3 et p = 0, 1 ou 2,

des matières de charge à effet thixotropique, des catalyseurs de condensation et le cas échéant d'autres produits auxiliaires connus en soi.

2. Masses de polydiorganosiloxannes selon la revendication 1, caractérisées en ce qu'on a mélangé 100 parties en poids d'un alpha, oméga-dihydroxypolydiméthylsiloxanne, 3 à 30 parties en poids d'un méthylalkyldiamidosilane ou -diaminosilane, 6 à 30 parties en poids d'un méthylsilane de formule générale $CH_3Si(NXY)_p(OZ)_q$ jusqu'à 400 parties en poids de matière de charge et 0,01 à 6,0 parties en poids d'un catalyseur de condensation ainsi que, le cas échéant, jusqu'à 100 parties en poids d'un alpha, oméga-bis-(triméthylsiloxy)-polydiméthylsiloxanne.

3. Masses de polydiorganosiloxannes selon l'une des revendications 1 ou 2, caractérisées en ce que l'on utilise en tant que silane difonctionnel le diméthyl-di-N-méthylbenzamidosilane.

4. Masses de polydiorganosiloxannes selon la revendication 1 ou 2, caractérisées en ce que l'on utilise en tant que silane difonctionnel le diméthyldibutylaminosilane ou le diméthyldicyclohexylaminosilane.

5. Masse de polydiorganosiloxannes selon l'une des revendications 1 ou 2, caractérisée en ce que l'on utilise en tant que méthylsilane $CH_3Si(OR)_3$.

6. Masse de polydiorganosiloxanne selon l'une des revendications 1 ou 2, caractérisée en ce que l'on utilise en tant que méthylsilane $CH_3Si(OCH_3)_3$.

7. Masse de polydiorganosiloxanne selon l'une des revendications 1 ou 2, caractérisée en ce que l'on utilise en tant que méthylsilane un méthyldialcoxy-N-méthylbenzamidosilane et/ou un méthyldi-N-méthylbenzamidoalcoxysilane.

8. Masse de polydiorganosiloxanne selon l'une des revendications 1 ou 2, caractérisée en ce que l'on utilise en tant que méthylsilane le méthyldiéthoxy-N-méthylbenzamidosilane et/ou le méthyl-di-N-méthylbenzamidoéthoxysilane.

9. Masse de polydiorganosiloxanne selon l'une des revendications 1 à 8, caractérisée en ce que l'on utilise conjointement de 0 à 10 parties en poids d'un ester titanique.

10. Masse de polydiorganosiloxanne selon la revendication 9, caractérisée en ce que l'on utilise en tant qu'ester titanique le bis-(éthylacétoacétate) de di-isobutoxy-titane.